(19) Europäisches Patentamt
European Patent Office
Office européen des brevets

(11) Publication number: **0 253 576 B1**

# EUROPEAN PATENT SPECIFICATION

(12)

(45) Date of publication of patent specification :
09.01.91 Bulletin 91/02

(51) Int. Cl.⁵ : **B29C 45/16**, F16L 47/06, F16L 21/02

(21) Application number : 87306076.8

(22) Date of filing : 09.07.87

(54) Conduit couplings.

(30) Priority : 18.07.86 GB 8617664
18.07.86 GB 8617665

(43) Date of publication of application :
20.01.88 Bulletin 88/03

(45) Publication of the grant of the patent :
09.01.91 Bulletin 91/02

(84) Designated Contracting States :
AT BE CH DE ES FR GB GR IT LI LU NL SE

(56) References cited :
GB-A- 1 477 074
GB-A- 2 035 192
GB-A- 2 037 840
US-A- 4 268 237

(73) Proprietor : WAVIN B.V.
Händellaan 251
NL-8031 EM Zwolle (NL)

(72) Inventor : Nicholas, Terry George
2, Eton Close Hullavington
Chippenham Wilts (GB)

(74) Representative : Abbie, Andrew Kenneth et al
R.G.C. Jenkins & Co. 26 Caxton Street
London SW1H 0RJ (GB)

# Description

This invention relates to conduit couplings comprising a socket having an internal seal for sealing contact with a conduit length received in the socket, and more particularly to a method of making such a conduit coupling.

Conventionally, the socket and seal of such conduit couplings are formed separately and then assembled together with some form of retention member for retaining the seal in the coupling against displacement for example during fitting of a conduit length therein. Our British Patent Specifications 2037840 and 1418645 show examples of such arrangements, in channel conduit couplings and pipe conduit couplings respectively.

An object of the present invention is to provide a method by which the seal can be formed integrally with the socket, thus avoiding the need to assemble the two together and the need to provide an additional retention member as aforesaid.

GB-A-2035192 discloses a method of making a pipe coupling comprising a socket having an internal seal for sealing contact with a pipe length received in the socket. The disclosed method includes injecting moulding the socket in a mould having a first core which defines an axially extending internal surface of an end portion of the socket, axially withdrawing said first core means over said internal surface to a position whereat the axially inner edge of said first core means defines an edge of a cavity formed between said internal surface of the socket and a second core means of the mould, and injecting material into said cavity through passage means defined by a first passage in an outer mould portion and a second passage in the moulded socket, which passages are blocked by a third core during moulding of the socket.

The present invention provides a method of making a conduit coupling comprising a socket having an internal seal for sealing contact with a conduit length received in the socket, the method including injection moulding the socket in a mould having first core means defining an axially extending internal surface of an end portion of the socket, axially withdrawing said first core means over said internal surface to a position whereat an axially inner edge of said first core means defines an axially outer edge of a cavity formed between said internal surface of the socket and a second core means of said mould, and injecting material for said seal into said cavity through passage means in said mould, which passage means is defined at least in part by said first core means, to form said seal _in situ_ on said internal surface of the socket.

The invention also includes a conduit coupling made by a method as defined in the last preceding paragraph. The invention is applicable both to conduit couplings comprising channel conduit couplings where the socket thereof defines a channel for receiving a channel conduit length, for example a gutter length, and to conduit couplings comprising pipe couplings where the socket thereof is tubular for receiving a pipe length.

Preferably, in the method the material for the seal is injected through passage means in said mould which exit to said cavity between said first core means and said internal surface of the socket.

Advantageously, the first core means may define at least one undercut axially extending groove in said internal surface of the socket.

Further, the second core means may define at least one recess in said cavity opposite said internal surface of the socket such that the seal formed in said cavity has at least one sealing projection.

In order that the invention may be well understood, two embodiments thereof, which are given by way of example only, will now be described, with reference to the accompanying drawings, in which :

Figure 1 is an end view of a channel conduit coupling ;

Figures 2 to 4 are axial cross-sections of a mould for making the coupling, illustrating successive steps in a method of making the coupling ;

Figure 5 is an end view of a pipe coupling ; and

Figures 6 and 7 are semi-axial cross-sections of a mould for making the pipe coupling, illustrating successive steps in a method of making the coupling.

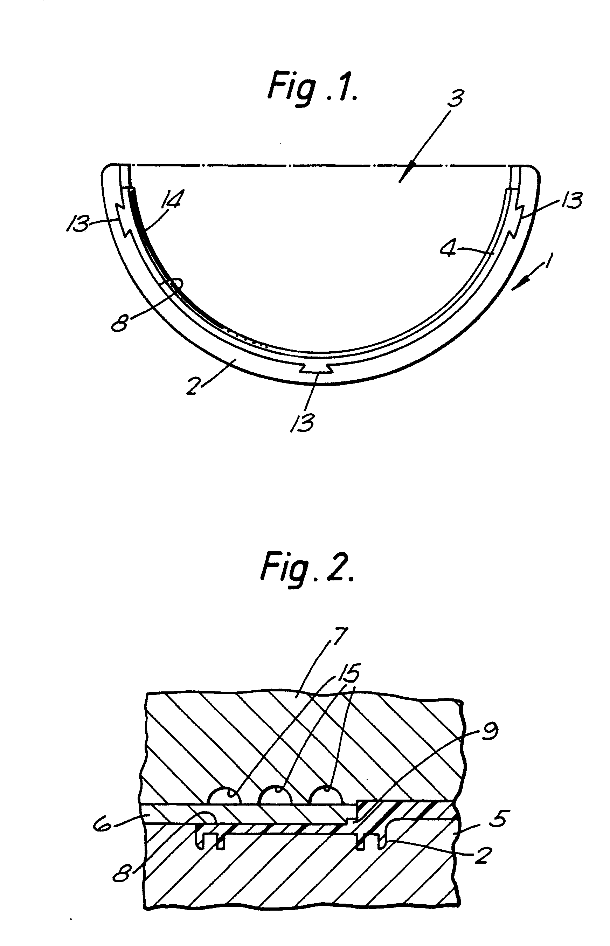

Referring first to Figures 1 to 4, the channel conduit coupling 1 shown comprises a gutter coupling having a thermoplastics socket 2 defining a channel 3 for receiving an end portion of a rainwater gutter length (not shown) and having an internal seal 4 for sealing contact with such an end portion received therein. The gutter coupling may form part of a variety of gutter fittings, for example gutter support brackets, unions and downpipe connectors.

The gutter fitting provided with the coupling 1 is injection moulded from plastics material and the portion of the mould concerned with the moulding of the coupling is shown in consecutive stages of the moulding operation in Figures 2 to 4. Referring first to Figure 2, the mould is shown in a condition for the moulding of the socket 2 of the coupling with the mould cavity in this condition filled with thermoplastics material, such as P.V.C. which has been injected thereinto to form the socket 2 along with the remaining part of the gutter fitting integral therewith and formed from the same thermoplastics material. In this condition the mould cavity is defined by an outer mould part 5 and first and second cores 6 and 7. The first core 6 fits within an external recess of the second core 7 and defines an axially extending internal surface 8 of an end portion of the socket, as well as a stepped shoulder 9 axially inward of the surface 8.

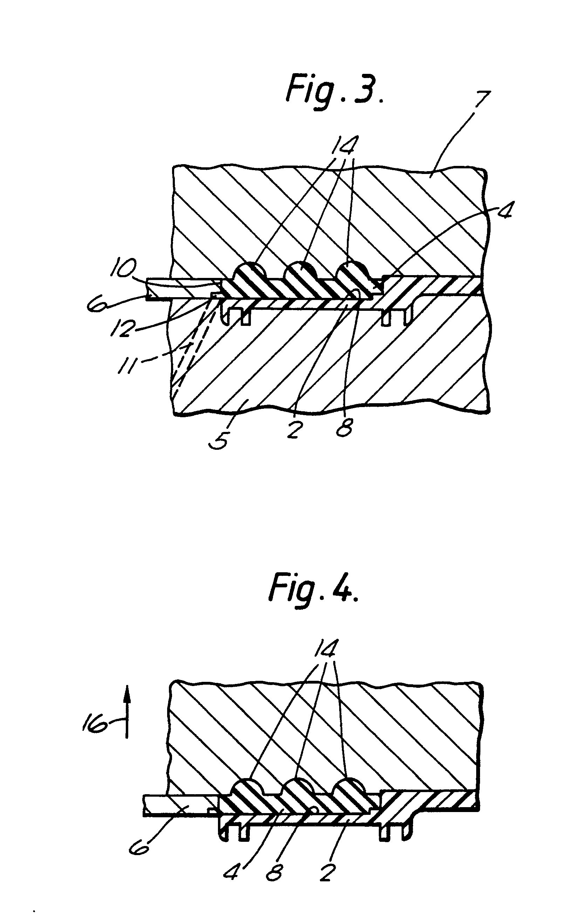

After the socket has been injection moulded, the first core 6 is axially withdrawn from the mould over the internal surface 8 of the socket 2 to a position as shown in Figure 3 whereat an axially inner edge 10 of the first core 6 which defines the stepped shoulder 9 of the socket in the condition of the mould shown in Figure 2 defines an axially outer edge of a cavity for the seal 2 formed between the internal surface 8 of the socket and the second core 7. A thermoplastics material for the seal is injected into this cavity and the seal 2 is thereby formed in situ on the internal surface 8 of the socket as illustrated in Figure 3. Injection of the seal material into the cavity therefor is via a passage means provided in the mould and including at least one passage 11 in the outer mould part 5 (as shown in dotted line in Figure 3) and a further passage 12 defined by a groove along the edge 10 of the first core 6 adjacent the internal surface 8 of the socket. Thus, the passage means exit to the seal cavity between the first core 6 and the internal surface 8 of the socket. The seal material is such that it chemically bonds with the thermoplastics material of the socket so that in the finished coupling the seal is securely fixed to the socket. To assist the fixing of the seal to the socket a mechanical interconnection between these two parts may also be provided and such an interconnection is provided in the embodiment in the form of three undercut axially extending grooves 13 in the internal surface 8 of the socket which grooves are filled with the seal material. As shown, the grooves are dovetail in configuration and are formed by corresponding projections (not shown) on the surface of the first core 6 which defines the internal surface 8 of the socket 2.

Additionally, in the illustrated embodiment the seal 4 is provided with sealing projections 14 which extend along the length of the seal for providing three separate axially spaced seals with a gutter length received in the socket 2. The projections are semicircular in cross-section and are formed by corresponding recesses 15 provided in the second core 7 opposite the internal surface 8 of the socket. As will be appreciated from the drawings, when the mould is in the Figure 2 condition for moulding the socket, the recesses 15 of the second core 7 are blanked off by the first core 6 and when the first core 6 is withdrawn to its Figure 3 position the recesses 15 define part of the cavity for the seal.

After formation of the seal 4 on the internal surface 8 of the socket the mould is opened by retracting the cores 6 and 7 from the mould part 5 as indicated by the arrow 16 in Figure 4. The moulded fitting is carried by the cores during this retraction and is subsequently ejected from the cores by conventional ejector pins (not shown).

It is to be understood that the illustrated gutter coupling could be modified to have any desired number of sealing projections 14, or to be provided with some other sealing surface configuration defined by the second core 7.

Further, it is to be understood that when the chemical bond between the seal and socket materials is sufficient to ensure that the seal will be retained in position in use, the mechanical interconnection of the illustrated embodiment may be omitted. If the mechanical interconnection is provided it may, of course, comprise any desired number of undercut grooves in the internal surface 8 of the socket filled with seal material.

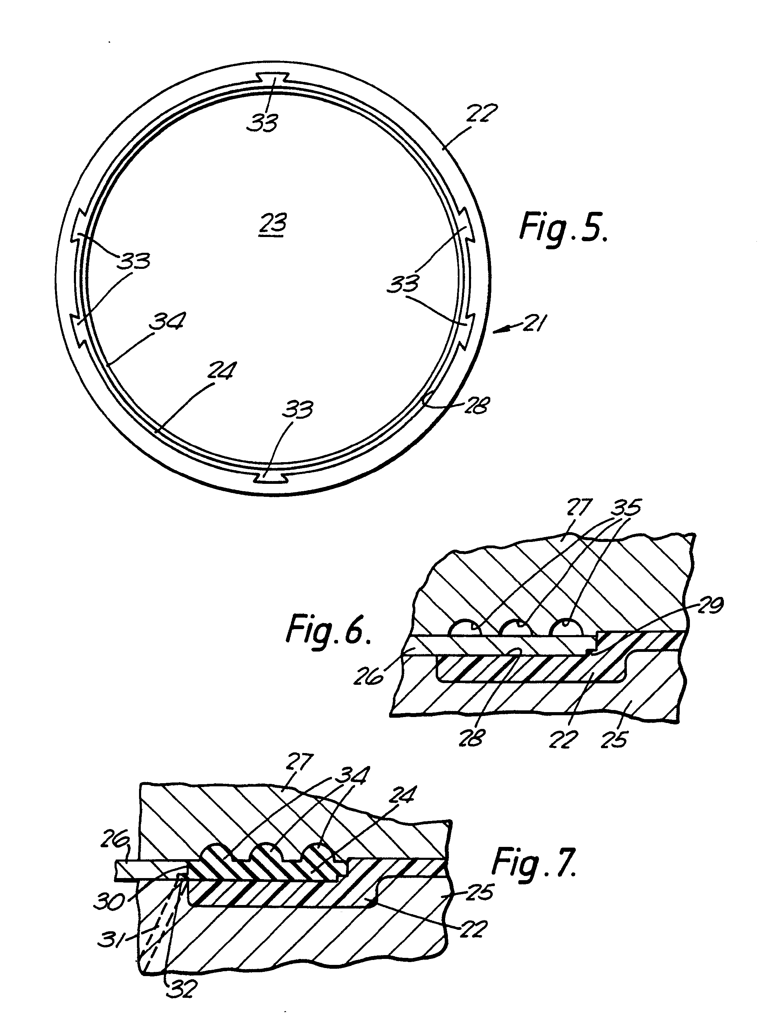

Referring now to Figures 5 to 7, the pipe coupling 21 shown comprises a thermoplastics tubular socket 22 having a mouth 23 for receiving an end portion of a pipe length (not shown) and having an internal seal 24 for sealing contact with such an end portion received therein. The pipe coupling may form part of a variety of pipe fittings for example through couplings, pipe bends, or T or Y connectors or be formed integral with components to which pipes have to be connected.

The pipe fitting provided with the coupling 21 is injection moulded from plastics material and the portion of the mould concerned with the moulding of the coupling is shown in consecutive stages of the moulding operation in Figures 6 and 7. Referring first to Figure 6, the mould is shown in a condition for the moulding of the sockets 22 of the coupling with the mould cavity in this condition filled with thermoplastics material, such as P.V.C. which has been injected thereinto to form the socket 22 along with the remaining part of the gutter fitting integral therewith and formed from the same thermoplastics material. In this condition the mould cavity is defined by an outer mould part 25 and first and second cores 26 and 27. The first core 26 fits within an external recess of the second core 27 and defines an axially extending internal surface 28 of an end portion of the socket, as well as a stepped shoulder 29 axially inward of the surface 28.

After the socket has been injection moulded, the first core 26 is axially withdrawn from the mould over the internal surface 28 of the socket 22 to a position as shown in Figure 7 whereat an axially inner edge 30 of the first core 26 which defines the stepped shoulder 29 of the socket in the condition of the mould shown in Figure 6 defines an axially outer edge of a cavity for the seal 24 formed between the internal surface 28 of the socket and the second core 27. A thermoplastics material for the seal is injected into this cavity and the seal 24 is thereby formed in situ on the internal surface 28 of the socket as illustrated in Figure 7. Injection of the seal material into the cavity therefor is via passage means provided in the mould and including at least one passage 31 in the outer mould part 25 (as shown in dotted line in Figure 7) and a further passage 32 defined by a groove along the edge 30 of the first core 26 adjacent the internal surface 28 of the socket. Thus, the passage means exit the seal cavity between the first core 26 and the internal surface 28 of the socket. The seal material is such that it chemically bonds with the thermoplastics material of the socket so that in the finished coupling the seal is securely fixed to the socket. To assist the fixing of the seal to the socket a mechanical interconnection between these two parts may also be provided and such an interconnection is provided in the embodiment in the form of six undercut axially extending grooves 33 in the internal surface 28 of the socket which grooves are filled with the seal material. As shown, the grooves are dovetail in configuration and are formed by corresponding projections (not shown) on the surface of the first core 26 which defines the internal surface 28 of the socket 22.

Additionally, in the illustrated embodiment the seal 24 is provided with sealing projections 34 which extend along the length of the seal for providing three separate axially spaced seals with a gutter length received in the socket 22. The projections are semicircular in cross-section and are formed by corresponding recesses 35 provided in the second core 27 opposite the internal surface 28 of the socket. As will be appreciated from the drawings, when the mould is in the Figure 6 condition for moulding the socket, the recesses 35 of the second core 27 are blanked off by the first core 26 and when the first core 26 is withdrawn to its Figure 7 position the recesses 35 define part of the cavity for the seal.

After formation of the seal 24 on the internal surface 28 of the socket, the cores 26 and 27 are axially withdrawn from the mould leftwards as viewed in Figure 3, the sealing member 24 being deformed by the core 27 as it is withdrawn thereover, and the mould 25 is removed from the pipe coupling, for example by axial movement rightwardly as viewed in Figure 7 or where the mould 25 is divided into one or more axial sections by moving those sections radially outwardly.

It is to be understood that the illustrated pipe coupling could be modified to have any desired number of sealing projections 34, or to be provided with some other sealing surface configuration defined by the second core 27.

Further, it is to be understood that when the chemical bond between the seal and socket materials is sufficient to ensure that the seal will be retained in position in use, the mechanical interconnection of the illustrated embodiment may be omitted. If the mechanical interconnection is provided it may, of course, comprise any desired number of undercut grooves in the internal surface 28 of the socket filled with seal material.

## Claims

1. A method of making a conduit coupling (1 ; 21) comprising a socket (2 ; 22) having an internal seal (4 ; 24) for sealing contact with a conduit length received in the socket, the method including injection moulding the socket in a mould having first core means (6 ; 26) defining an axially extending internal surface (8 ; 28) of an end portion of the socket, axially withdrawing said first core means over said internal surface (8 ; 28) to a position whereat an axially inner edge (10 ; 30) of said first core means defines an axially outer edge of a cavity formed between said internal surface of the socket and a second core means (7 ; 27) of said mould, and injecting material for said seal into said cavity through passage means (11, 12 ; 31, 32) in said mould, which passage means is defined at least in part by said first core means (6 ; 26) to form said seal (4 ; 24) _in situ_ on said internal surface (8 ; 28) of the socket.

2. A method of making a pipe coupling (21) comprising a socket (22) having an internal seal (24) for sealing contact with a pipe length received in the socket, the method including injection moulding the socket in a mould having first core means (26) defining an axially extending internal surface (28) of an end portion of the socket, axially withdrawing said first core means over said internal surface (28) to a position whereat an axially inner edge (30) of said first core means defines an axially outer edge of a cavity formed between said internal surface of the socket and a second core means (27) of said mould, and injecting material for said seal into said cavity through passage means (31, 32) in said mould, which passage means is defined at least in part by said first core means (26), to form said seal (24) _in situ_ on said internal surface (28) of the socket.

3. A method of making a channel conduit coupling (1) comprising a socket (2) having an internal seal (4) for sealing contact with a channel conduit length received in the socket, the method including injection moulding the socket in a mould having first core means (6) defining an axially extending internal surface (8) of an end portion of the socket, axially withdrawing said first core means over said internal surface (8) to a position whereat an axially inner edge (10) of said first core means defines an axially outer edge of a cavity formed between said internal surface (8) of the socket and a second core means (7) of said mould, and injecting material for said seal into said cavity through passage means (11, 12) in said mould which passage means is defined at least in part by said first core means (6) to form said seal (4) _in situ_ on said internal surface (8) of the socket.

4. A method as claimed in claim 1, 2 or 3, wherein the material for said seal (4 ; 24) is injected through passage means in said mould which exit to said cavity between said first core means (6 ; 26) and said internal surface (8 ; 28) of the socket.

5. A method as claimed in any one of the preceding claims, wherein said first core means (6 ; 28) defines at least one undercut axially extending groove (13 ; 33) in said internal surface (8 ; 28) of the socket.

6. A method as claimed in any one of the preceding claims, wherein said second core means (7 ; 27) defines at least one recess (15 ; 35) in said cavity opposite said internal surface (8 ; 28) of the socket such that the seal (4 ; 24) formed in said cavity has at least one sealing projection (14 ; 34).

7. A conduit coupling made by a method as claimed in claim 1, comprising a gutter coupling (1), the socket (2) thereof defining a channel for receiving a gutter length.

8. A conduit coupling made by a method as claimed in claim 1, comprising a pipe coupling (21), the socket (22) thereof being tubular for receiving a pipe length.

## Ansprüche

1. Verfahren zum Herstellen einer Leitungskupplung (1 ; 21) mit einer Muffe (2 ; 22), die eine Innendichtung (4 ; 24) für einen Dichtungskontakt mit einer in der Muffe aufgenommenen Leitungslänge besitzt, wobei das Verfahren die Schritte umfaßt, daß die Muffe in einer Form mit einer ersten Kerneinrichtung (6 ; 26) spritzgegossen wird, die eine axial verlaufende innnere Oberfläche (8 ; 28) eines Endbereichs der Muffe definiert, die erste Kerneinrichtung über diese innere Oberfläche (8 ; 28) auf eine Position axial zurückgezogen wird, in der ein axial innerer Rand (10 ; 30) der ersten Kerneinrichtung einen axial äußeren Rand eines zwischen der inneren Oberfläche der Muffe und einer zweiten Kerneinrichtung (7 ; 27) der Form gebildeten Hohlraums bildet, und Material für die Dichtung in den Hohlraum durch eine Kanaleinrichtung (11, 12 ; 31, 32) in der Form eingespritzt wird, welche Kanaleinrichtung zumindest zum Teil von der ersten Kerneinrichtung (6 ; 26) gebildet ist, um die Dichtung (4 ; 24) an Ort und Stelle auf der inneren Oberfläche (8 ; 28) der Muffe zu bilden.

2. Verfahren zum Herstellen einer Rohrkupplung (21) mit einer Muffe (22), die eine Innendichtung (24) für einen Dichtungskontakt mit einer in der Muffe aufgenommenen Rohrlänge besitzt, wobei das Verfahren die Schritte umfaßt, daß die Muffe in einer Form mit einer ersten Kerneinrichtung (26) spritzgegossen wird, die eine axial verlaufende innere Oberfläche (28) eines Endbereichs der Muffe definiert, die erste Kerneinrichtung über diese innere Oberfläche (28) auf eine Position axial zurückgezogen wird, in der ein axial innerer Rand (30) der ersten Kerneinrichtung einen axial äußeren Rand eines zwischen der inneren Oberfläche der Muffe und einer zweiten Kerneinrichtung (27) der Muffe gebildeten Hohlraums bildet, und Material für die Dichtung in den Hohlraum durch eine Kanaleinrichtung (31, 32) in der Form eingespritzt wird, welche Kanaleinrichtung zumindest zum Teil von der ersten Kerneinrichtung (26) gebildet ist, um die Dichtung (24) an Ort und Stelle auf der inneren Oberfläche (28) der Muffe zu bilden.

3. Verfahren zum Herstellen einer Rinnenleitungskupplung (1) mit einer Muffe (2), die eine Innendichtung (4) für einen Dichtungskontakt mit einer in der Muffe aufgenommenen Rinnenleitungslänge besitzt, wobei das Verfahren die Schritte umfaßt, daß die Muffe in einer Form mit einer ersten Kerneinrichtung (6) spritzgegossen wird, die eine axial verlaufende innere Oberfläche (8) eines Endbereichs der Muffe definiert, die erste Kerneinrichtung über diese innere Oberfläche (8) auf eine Position axial zurückgezogen wird, in der ein axial innerer Rand (10) der ersten Kerneinrichtung einen axial äußeren Rand eines zwischen der inneren Oberfläche (8) der Muffe und einer zweiten Kerneinrichtung (7) der Form gebildeten Hohlraums bildet, und Material für die Dichtung in den Hohlraum durch eine Kanaleinrichtung (11, 12) in der Form eingespritzt wird, welche Kanaleinrichtung zumindest zum Teil von der ersten Kerneinrichtung (6) gebildet ist, um die Dichtung (4) an Ort und Stelle auf der inneren Oberfläche (8) der Muffe zu bilden.

4. Verfahren nach Anspruch 1, 2 oder 3, bei dem das Material für die Dichtung (4 ; 24) durch eine Kanaleinrichtung in der Form eingespritzt wird, die in den Hohlraum zwischen der ersten Kerneinrichtung (6 ; 26) und der inneren Oberfläche (8 ; 28) der Muffe ausmündet.

5. Verfahren nach einem der vorhergehenden Ansprüche, bei dem die erste Kerneinrichtung (6 ; 28) zumindest eine hinterschnittene, axial verlaufende Nut (13 ; 33) in der inneren Oberfläche (8 ; 28) der Muffe definiert.

6. Verfahren nach einem der vorhergehenden Ansprüche, bei dem die zweite Kerneinrichtung (7 ; 27) zumindest eine Aussparung (15, 35) im Hohlraum gegenüber der inneren Oberfläche (8 ; 28) der Muffe bildet, derart, daß die im Hohlraum gebildete Dichtung (4 ; 24) zumindest einen Dichtungsvorsprung (14 ; 34) besitzt.

7. Leitungskupplung, hergestellt durch ein Verfahren gemäß Anspruch 1, mit einer Rinnenkupplung (1), deren Muffe (2) eine Rinne zur Aufnahme einer Rinnenlänge bildet.

8. Leitungskupplung, hergestellt durch ein Verfahren gemäß Anspruch 1, mit einer Rohrkupplung (21), deren Muffe (22) zur Aufnahme einer Rohrlänge rohrförmig ausgebildet ist.

## Revendications

1. Procédé de fabrication d'un raccord de conduits (1 ; 21) comprenant un manchon (2 ; 22) comportant un joint d'étanchéité interne (4 ; 24) en vue d'un contact étanche avec un tronçon de conduit reçu dans le manchon, le procédé consistant à mouler par injection le manchon dans un moule comportant des premiers moyens formant noyau (6 ; 26) définissant une surface interne s'étendant axialement (8 ; 28) d'une partie d'extrémité du manchon, à retirer axialement lesdits premiers moyens formant noyau sur ladite surface interne (8 ; 28) jusqu'à une position au niveau de laquelle un bord axialement interne (10; 30) desdits premiers moyens formant noyau définit un bord axialement externe d'une cavité formée entre ladite surface interne du manchon et des seconds moyens formant noyau (7 ; 27) dudit moule, et à injecter de la matière destinée audit joint d'étanchéité à l'intérieur de ladite cavité à travers des moyens formant passage (11, 12 ; 31, 32) dans ledit moule, ces moyens formant passage étant définis au moins en partie par lesdits premiers moyens formant noyau (6; 26) afin de former ledit joint d'étanchéité (4 ; 24) <u>in situ</u> sur ladite surface interne (8 ; 28) du manchon

2. Procédé de fabrication d'un raccord de tuyaux (21) comprenant un manchon (22) comportant un joint d'étanchéité interne (24) en vue d'un contact étanche avec un tronçon de tuyau reçu dans le manchon, le procédé consistant à mouler par injection le manchon dans un moule comportant des premiers moyens formant noyau (26) définissant une surface interne s'étendant axialement (28) d'une partie d'extrémité du manchon, à retirer axialement lesdits premiers moyens formant noyau sur ladite surface interne (28) jusqu'à une position au niveau de laquelle un bord axialement interne (30) desdits premiers moyens formant noyau définit un bord axialement externe d'une cavité formée entre ladite surface interne du manchon et des seconds moyens formant noyau (27) dudit moule, et à injecter de la matière destinée audit joint d'étanchéité à l'intérieur de ladite cavité à travers des moyens formant passage (31, 32) dans ledit moule, ces moyens formant passage étant définis au moins en partie par lesdits premiers moyens formant noyau (26) afin de former ledit joint d'étanchéité (24) <u>in situ</u> sur ladite surface interne (28) du manchon

3. Procédé de fabrication d'un raccord (1) de conduits du type canal comprenant un manchon (2) comportant un joint d'étanchéité interne (4) en vue d'un contact étanche avec un tronçon de conduit du type canal reçu dans le manchon, le procédé consistant à mouler par injection le manchon dans un moule comportant des premiers moyens formant noyau (6) définissant une surface interne s'étendant axialement (8) d'une partie d'extrémité du manchon, à retirer axialement lesdits premiers moyens formant noyau sur ladite surface interne (8) jusqu'à une position au niveau de laquelle un bord axialement interne (10) desdits premiers moyens formant noyau définit un bord axialement externe d'une cavité formée entre ladite surface interne (8) du manchon et des seconds moyens formant noyau (7) dudit moule, et à injecter de la matière destinée audit joint d'étanchéité à l'intérieur de ladite cavité à travers des moyens formant passage (11, 12) dans ledit moule, ces moyens formant passage étant définis au moins en partie par lesdits premiers moyens formant noyau (6) afin de former ledit joint d'étanchéité (4) <u>in situ</u> sur ladite surface interne 8 du manchon.

4. Procédé selon la revendication 1, 2 ou 3, dans lequel la matière destinée audit joint d'étanchéité (4 ; 24) est injectée à travers des moyens formant passage dans ledit moule qui débouchent sur ladite cavité entre lesdits premiers moyens formant noyau (6 ; 26) et ladite surface interne (8 ; 28) du manchon

5. Procédé selon l'une quelconque des revendications précédentes, dans lequel lesdits premiers moyens formant noyau (6 ; 28) définissent au moins une rainure à fond élargi s'étendant axialement (13 ; 33) dans ladite surface interne (8 ; 28) du manchon.

6. Procédé selon l'une quelconque des revendications précédentes, dans lequel lesdits seconds moyens formant noyau (7 ; 27) définissent au moins un évidement (15 ; 35) dans ladite cavité en regard de ladite surface interne (8 ; 28) du manchon de sorte que le joint d'étanchéité (4 ; 24) formé dans ladite cavité présente au moins une saillie d'étanchéité (14; 34).

7. Raccord de conduits fabriqué par un procédé tel que défini dans la revendication 1, comprenant un raccord (1) de gouttière, dont le manchon (2) définit un canal pour recevoir un tronçon de gouttière.

8. Raccord de conduits fabriqué par un procédé selon la revendication 1, comprenant un raccord (21) de tuyaux, dont le manchon (22) est tubulaire afin de recevoir un tronçon de tuyau.

# Fig .1.

# Fig . 2.

## Fig. 3.

## Fig. 4.

Fig.5.

Fig.6.

Fig.7.